# EUROPÄISCHE PATENTANMELDUNG

(11) **EP 1 127 755 A2**
(43) Veröffentlichungstag der Anmeldung: **29.08.2001**
(21) Anmeldenummer: 01100466.0
(22) Anmeldetag: 08.01.2001
(51) Int. Cl.: B60R 25/00

(54) **Antidiebstahlsicherung und Sicherungssystem**

(30) Priorität: 25.02.2000 DE 10008989; 25.02.2000 DE 20006831 U; 03.04.2000 DE 10016537
(71) Anmelder: Delphi Technologies, Inc., Troy, MI 48007 (US)
(72) Erfinder: Ghosh, Sharmila, 55128 Mainz (DE); Gruchalski, Gerd, 57223 Kreuztal (DE)
(74) Vertreter: Manitz, Finsterwald & Partner Gbr

(57) **Zusammenfassung**

Die Erfindung betrifft eine Antidiebstahlsicherung insbesondere für Kraftfahrzeuge, mit zumindest einem Radar-Abstandssensor und einem vorzugsweise als Chipkarte ausgeführten, der Benutzeridentifikation dienenden Transponder, der vom Abstandssensor ausgehende Radarsignale aufnimmt, verstärkt und vorzugsweise auf einer anderen Frequenz wieder ausstrahlt, wobei der jeweilige Abstand zwischen Abstandssensor und Transponder anhand der vom Transponder zurückgestrahlten und vom Abstandssensor wieder aufgenommenen Radarsignale ermittelbar ist. Sie betrifft ferner ein Sicherungssystem insbesondere für Kraftfahrzeuge mit wenigstens einem multifunktionalen Sensor, der gleichzeitig sowohl als Radareinheit als auch als Sende-/Empfangseinheit zur Kommunikation mit einer externen Einrichtung vorgesehen ist.

## Beschreibung

Die Erfindung betrifft eine Antidiebstahlsicherung sowie ein Sicherungssystem insbesondere für Fahrzeuge.

Es sind bereits Chipkartensysteme für einen schlüssellosen Zugang (keyless entry) bekannt, bei denen mittels der den Schlüssel ersetzenden Chipkarte beispielsweise die Türen und der Kofferraum des betreffenden Kraftfahrzeugs geöffnet und dessen Motor gestartet werden kann. Dabei werden zwischen einem im Kraftfahrzeug integrierten Sender und der Chipkarte Sende- und Antwortsignale gewechselt. Bevor eine jeweilige Funktion ausgeführt werden kann, wird der von der Chipkarte übermittelte Identifikationscode geprüft.

Bei derartigen Systemen besteht nun aber die Gefahr, daß die Chipkarte oder ein anderer vergleichbarer Antwortgeber (relay station) durch Unbefugte imitiert wird, wodurch sich insbesondere die Diebstahlsgefahr entsprechend erhöht.

Ein Ziel der Erfindung ist es, eine zuverlässigere Antidiebstahlsicherung zu schaffen.

Zur Lösung dieser Aufgabe umfaßt die erfindungsgemäße Antidiebstahlsicherung wenigstens einen Radar-Abstandssensor und einen beispielsweise als Chipkarte ausgeführten, der Benutzeridentifikation dienenden Transponder, der vom Abstandssensor ausgehende Radarsignale aufnimmt, verstärkt und vorzugsweise auf einer anderen Frequenz wieder ausstrahlt, wobei der jeweilige Abstand zwischen Abstandssensor und Transponder anhand der vom Transponder zurückgestrahlten und vom Abstandssensor wieder aufgenommenen Radarsignale ermittelbar ist.

Aufgrund dieser Ausbildung ist die Gefahr eines Mißbrauchs bzw. eines Diebstahls auf ein Minimum reduziert. Anhand des jeweils ermittelten Abstands zwischen Abstandssensor und Transponder kann die betreffende Auswerteeinheit die jeweilige Situation zuverlässig einschätzen, um erforderlichenfalls zu verhindern, daß die betreffenden Funktionen ausgeführt werden und/oder oder Alarm ausgelöst wird.

Bei einer bevorzugten praktischen Ausführungsform der erfindungsgemäßen Antidiebstahlsicherung liegen die vom Abstandssensor ausgehenden, in einer vorgebbaren Bandbreite ausgestrahlten Radarsignale im GHz-Bereich. Sie können beispielsweise im Bereich von etwa 24 GHz liegen.

Im Transponder werden die Radarsignale vorzugsweise um eine vorgebbare definierte Frequenz versetzt.

Von Vorteil ist auch, wenn die vom Transponder ausgehenden, vom Abstandssensor aufgenommenen Radarsignale im Abstandssensor um eine vorgebbare definierte Frequenz versetzt werden. Dabei werden diese Radarsignale im Abstandssensor vorzugsweise nach unten versetzt.

Die erfindungsgemäße Antidiebstahlsicherung kann insbesondere Teil eines Sicherungssystems, vorzugsweise Chipkartensystems, für einen schlüssellosen Zugang (keyless entry system) sein.

Alternativ oder zusätzlich kann die erfindungsgemäße Antidiebstahlsicherung auch Teil eines Innenraumschutzsystems und/oder Teil eines Einbruchmeldesytems sein.

Bei einer bevorzugten praktischen Ausführungsform der erfindungsgemäßen Antidiebstahlsicherung ist der Radar-Abstandssensor in einem Kraftfahrzeug integriert.

Von Vorteil ist auch, wenn der Abstandssensor und/oder der Antwortgeber bzw. Transponder für einen Zeitmultiplex-Betrieb ausgelegt sind, um vorzugsweise gleichzeitig mehrere Sicherungsfunktionen zu erfüllen.

Als Abstandssensor kann beispielsweise ein FMCW- Radar-Abstandssensor vorgesehen ist. Dabei ist unter FMCW- Radar ein frequenzmodulierter Dauerradar zu verstehen (FMCW = frequency modulated continuous wave).

Wie bereits erwähnt, sind Chipkartensysteme für einen schlüssellosen Zugang (keyless entry) bekannt, bei denen mittels einer den Schlüssel ersetzenden, der Benutzeridentifikation dienenden Einrichtung (CID = Customer Identification Device) wie beispielsweise einer Chipkarte z.B. die Türen und der Kofferraum des betreffenden Kraftfahrzeugs geöffnet und dessen Motor gestartet werden kann. Dabei werden zwischen wenigstens einem im Kraftfahrzeug integrierten Sender und der CID Sende- und Antwortsignale gewechselt. Bevor eine jeweilige Funktion ausgeführt werden kann, wird der von der CID übermittelte Identifikationscode geprüft. Dabei genügt es, daß der eine gültige CID bei sich tragende Benutzer sich nahe am Kraftfahrzeug befindet. Bei einem solchen System für einen schlüssellosen Zugang handelt es sich um ein bidirektionales HF-Kommunikationssystem, bei dem für eine Signalübertragung vom Kraftfahrzeug zur CID beispielsweise eine Frequenz von 125 kHz und für eine Signalübertragung von der CID zum Kraftfahrzeug beispielsweise eine Frequenz von 433 MHz verwendet wird.

Bei diesen bekannten Systemen treten in erster Linie die beiden folgenden Probleme auf:
- Es muß unterschieden werden, ob die CID sich außerhalb oder innerhalb des Fahrzeugs befindet. Dies wird derzeit mit der Verwendung einer Mehrzahl von 125 kHz-Antennen erreicht, was sehr kostenintensiv ist und angesichts der Antennentoleranzen die Gefahr von Instabilitäten mit sich bringt.
- Mit einem bei 433 MHz oder 125 kHz arbeitenden System kann das sogenannte Relaisstation-Problem (relay station problem) nicht vermieden werden, das darin besteht, daß das Fahrzeug durch einen Dieb geöffnet werden kann, indem dieser die Verbindung zu der vom Fahrzeug weit entfernten CID über eine oder mehrere Relaisstationen überbrückt.

Bei Fahrzeugen mit schlüssellosem Zugang erfolgt die Innen-/Außenlokalisation der CID bisher über eine Vielzahl von HF-Spulen, was relativ kostenaufwendig ist. Der Innenraumschutz sowie zumindest Teile des schlüssellosen Zugangs werden bisher durch getrennte Sensoren verwirklicht.

Ein weiteres Ziel der Erfindung ist es daher, ein zuverlässigeres und kostengünstigeres Sicherungssystem zu schaffen, bei dem die zuvor genannten Nachteile beseitigt sind.

Zur Lösung dieser Aufgabe umfaßt das erfindungsgemäße Sicherungssystem wenigstens einen multifunktionalen Sensor, der gleichzeitig sowohl als Radareinheit als auch als Sende-/Empfangseinheit zur Kommunikation mit einer externen Einrichtung vorgesehen ist.

Aufgrund dieser Ausbildung ist es beispielsweise möglich, mit ein und derselben Sensoreinrichtung gleichzeitig sowohl radartypische Funktionen wie beispielsweise Abstandsmessungen und/oder Ortungsfunktionen als auch die für die Systeme für einen schlüssellosen Zugang typischen Funktionen zu erfüllen. Es ergibt sich insgesamt ein äußerst einfacher und entsprechend kostengünstiger Aufbau. Mit dem einfacheren Aufbau wird entsprechend auch die Zuverlässigkeit erhöht.

Der multifunktionale Sensor umfaßt vorzugsweise einen im Hochfrequenzbereich arbeitenden Kurzdistanz-Radarsensor (SDR = Short Distance Radar) für einen Innenraumschutz. Erfindungsgemäß kann insbesondere ein solcher Radarsensor gleichzeitig auch als Sende-/Empfangseinheit zur Kommunikation mit der externen Einrichtung vorgesehen sein.

Insbesondere im Hinblick auf eine möglichst optimale Bereichsüberwachung und/oder Objektortung ist es zweckmäßig, wenn der multifunktionale Sensor mehrere Empfänger und/oder mehrere Sender umfaßt.

Bei einer zweckmäßigen praktischen Ausführung des erfindungsgemäßen Sicherungssystem umfaßt der multifunktionale Sensor wenigstens einen Sender und/oder wenigstens einen Empfänger für eine drahtlose Kommunikation mit der externen Einrichtung.

Bei der externen Einrichtung kann es sich insbesondere um eine der Benutzeridentifikation dienende, vorzugsweise als aktive Empfangs/Sendeeinheit oder als Transponder ausgeführte Einrichtung (CID = Customer Identification Device) handeln.

Von Vorteil ist auch, wenn der multifunktionale Sensor wenigstens zwei Sender und/oder wenigstens zwei Empfänger zur Ortung der externen Einrichtung umfaßt. Mittels eines solchen multifunktionalen Sensors ist dann insbesondere auch feststellbar, ob sich die externe Einrichtung innerhalb oder außerhalb des überwachten Innenraums befindet. Dabei werden zur Ortung der externen Einrichtung vorzugsweise die von verschiedenen Empfängern empfangenen und/oder die von verschiedenen Sendern stammenden Signale miteinander verglichen. Über einen solchen Signalvergleich kann dann beispielsweise festgestellt werden, ob die betreffende externe Einrichtung innerhalb oder außerhalb des überwachten Innenraumes vorgesehen ist.

Bei einer zweckmäßigen praktischen Ausführungsform ist durch Messung der Laufzeit der zwischen dem multifunktionalen Sensor und der externen Einrichtung ausgetauschten Signale der jeweilige Abstand zwischen dem multifunktionalen Sensor und der externen Einrichtung bestimmbar. Damit ist es beispielsweise möglich, einen möglichen Mißbrauch mittels einer sogenannten Relaisstation (relay station attack) zu erkennen. Anhand des jeweils ermittelten Abstands zwischen dem Sensor und der beispielsweise durch eine CID gebildeten externen Einheit kann die betreffende Auswerteeinheit die jeweilige Situation zuverlässig einschätzen, um erforderlichenfalls zu verhindern, daß die jeweiligen Funktionen ausgeführt werden und/oder Alarm ausgelöst wird.

Eine bevorzugte praktische Ausführungsform des erfindungsgemäßen Sicherungssystems zeichnet sich dadurch aus, daß die externe Einrichtung vom multifunktionalen Sensor ausgehende, vorzugsweise HF-modulierte Signale aufnimmt, in definierter Weise ändert und anschließend wieder ausstrahlt. Vorzugsweise erfolgt die Laufzeitmessung anhand solcher durch die externe Einrichtung in definierter Weise geänderter und vom multifunktionalen Sensor wieder aufgenommener Signale.

Somit kann beispielsweise ein Kurzdistanz-Radarsensor (SDR = Short Distance Radar) gleichzeitig zur Verwirklichung der Funktionen eines Systems für einen schlüssellosen Zugang eingesetzt werden. So können beispielsweise 24 GHz-Transceiver des Kurzdistanz-Radarsensors gleichzeitig zur Kommunikation mit der externen Einrichtung wie beispielsweise einer der Benutzeridentifikation dienenden Einrichtung (CID) verwendet werden. Mit einem solchen Konzept ist es überdies möglich, die beiden vorrangigen Probleme des bisherigen Systems für einen schlüssellosen Zugang (keyless entry system) zu beseitigen. So kann der Versuch eines Mißbrauchs mittels einer Relaisstation (relay station attack) nunmehr beispielsweise durch eine entsprechende Abstandsmessung und/oder dadurch erkannt werden, daß festgestellt wird, ob sich die beispielsweise durch eine CID gebildete externe Einrichtung innerhalb oder außerhalb des überwachten Innenraums befindet. Hierzu genügt eine einzige Radarsensoreinheit.

Grundsätzlich ist auch eine beliebige Kombination der erfindungsgemäßen Antidiebstahlsicherung und des erfindungsgemäßen Sicherungssystems möglich.

Die Erfindung wird im folgenden anhand von Ausführungsbeispielen unter Bezugnahme auf die Zeichnung näher erläutert; in dieser zeigen:
- Figur 1: in rein schematischer Darstellung eine Antidiebstahlsicherung für ein Kraftfahrzeug,
- Figur 2: ein Funktionsdiagramm zur Erläuterung einer normalen den schlüssellosen Zugang betreffenden Funktion eines Sicherungssystems insbesondere für Kraftfahrzeuge,
- Figur 3: eine schematische Darstellung einer Kurzdistanz-Radareinheit (SDR) des Sicherungssystems, die gleichzeitig dazu verwendet wird, festzustellen, ob sich eine der Benutzeridentifikation dienende Einrichtung (CID) innerhalb oder außerhalb des überwachten Innenraums befindet,
- Figur 4: ein Funktionsdiagramm zur Darstellung des Normalfalls, bei dem sich der die CID bei sich tragende Benutzer in der Nähe des Kraftfahrzeuges befindet und eine direkte Kommunikation zwischen der SDR und der CID stattfindet, und
- Figur 5: ein Funktionsdiagramm zur Darstellung des Falls eines versuchten Mißbrauchs mittels zweier Relaisstationen (relay stations).

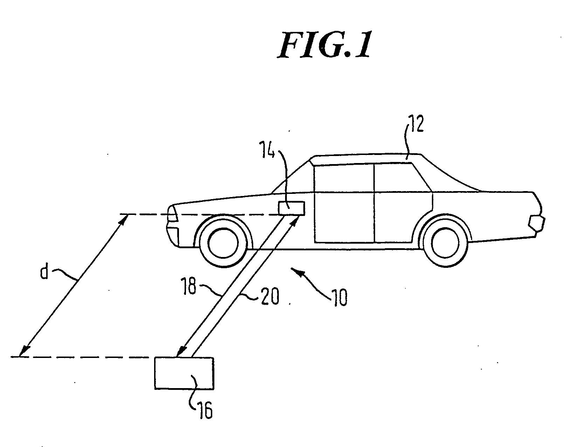

Figur 1 zeigt in rein schematischer Darstellung eine Antidiebstahlsicherung 10 für ein Kraftfahrzeug 12.

Die Antidiebstahlsicherung 10 umfaßt wenigstens einen Radar-Abstandssensor 14 und einen beispielsweise als Chipkarte ausgeführten, der Benutzeridentifikation dienenden Antwortgeber oder Transponder 16.

Der beispielsweise als Chipkarte vorgesehene Transponder 16 nimmt die vom Abstandssensor 14 ausgehenden Radarsignale 18 auf, um diese zu verstärken und vorzugsweise auf einer anderen Frequenz wieder auszustrahlen.

Der jeweilige Abstand d zwischen Abstandssensor 14 und Transponder 16 wird anhand der vom Transponder 16 zurückgestrahlten und vom Abstandssensor 14 wieder aufgenommenen Radarsignale 20 ermittelt, wozu in der betreffenden Auswerteeinheit eine entsprechende Laufzeitmessung erfolgen kann.

Die vom Abstandssensor 14 ausgehenden, in einer vorgebbaren Bandbreite ausgestrahlten Radarsignale 18 können insbesondere im GHz-Bereich und beispielsweise im Bereich von etwa 24 GHz liegen.

Die vom Transponder 16 aufgenommenen Radarsignale 18 werden um eine vorgebbare definierte Frequenz versetzt. Entsprechend werden im Abstandssensor 14 auch die vom Transponder 16 ausgehenden, vom Abstandssensor 14 aufgenommenen Radarsignale 20 um eine vorgebbare definierte Frequenz versetzt. Dabei werden die Radarsignale 20 im Abstandssensor 14 vorzugsweise nach unten versetzt.

Die Antidiebstahlsicherung 10 kann insbesondere Teil eines Sicherungs-systems, vorzugsweise Chipkartensystems, für einen schlüssellosen Zugang sein. Alternativ oder zusätzlich kann sie auch Teil eines Innenraumschutzsystems und/oder Einbruchmeldesytems sein.

Im vorliegenden Fall ist der Radar-Abstandssensor 14 in dem Kraftfahrzeug 12 integriert. Grundsätzlich kann das jeweilige Kraftfahrzeug auch mit mehreren solchen Sensoren versehen sein. Die betreffende Auswerteeinheit kann beispielsweise durch die zentrale Steuereinheit oder einen Bordcomputer realisiert sein.

Der Abstandssensor 14 und/oder der Transponder 16 können für einen Zeitmultiplex-Betrieb ausgelegt sein, um vorzugsweise gleichzeitig mehrere Sicherungsfunktionen zu erfüllen. So können beispielsweise gleichzeitig auch ein Innenraumschutzsystem und ein Einbruchmeldesystem verwirklicht sein.

Als Abstandssensor 14 kann beispielsweise ein FMCW- Radar-Abstandssensor vorgesehen ist. Dabei ist unter FMCW- Radar ein frequenzmodulierter Dauerradar zu verstehen (FMCW = frequency modulated continuous wave).

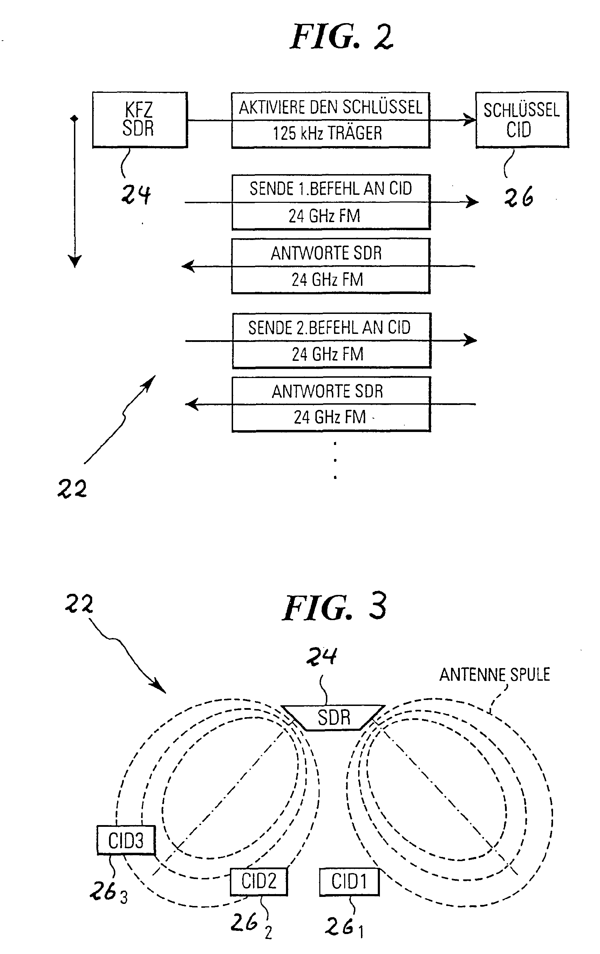

Das in den Figuren 2 bis 5 dargestellte, insbesondere für Kraftfahrzeuge verwendbare Sicherungssystem 22 umfaßt wenigstens einen multifunktionalen Sensor 24, der gleichzeitig sowohl als Radareinheit als auch als Sende- / Empfangseinheit zur Kommunikation mit einer externen Einrichtung 26 vorgesehen ist.

Beim vorliegenden Ausführungsbeispiel umfaßt der multifunktionale Sensor 24 einen Kurzdistanz-Radarsensor (SDR = Short Distance Radar), beispielsweise eine 24 GHz-FMCW-Radareinheit. Dabei ist unter FMCW-Radar wieder ein frequenzmodulierter Dauerradar zu verstehen (FMCW = frequency modulated continuous wave).

Die SDR-Einheit 24 kann beispielsweise vier Empfänger (links, rechts, vorne, hinten) für einen automatischen Innenraumschutz umfassen. Die Sender und Empfänger dieser SDR-Einheit 24 können auch zur Kommunikation für einen schlüssellosen Zugang (keyless entry) vorgesehen sein. Überdies kann die SDR-Einheit 24 auch zur Bestimmung des jeweiligen Abstands der externen Einrichtung eingesetzt werden. Im vorliegenden Fall ist die SDR-Einheit 24 gleichzeitig sowohl zur Bereichsüberwachung und/oder Objektortung als auch zur Kommunikation mit der externen Einrichtung 26 für einen schlüssellosen Zugang vorgesehen.

Bei der externen Einrichtung 26 kann es sich insbesondere um eine der Benutzeridentifikation dienende Einrichtung (CID = Customer Identification Device), beispielsweise eine Chipkarte, handeln.

Mit der multifunktionalen SDR-Einheit 24 ergibt sich ein insgesamt einfacherer und entsprechend kostengünstigerer und zuverlässigerer Aufbau des Sicherungssystems 22, da für die verschiedenen Funktionen nunmehr nur noch eine einzige Sensoreinheit vorgesehen ist.

Figur 2 zeigt ein Funktionsdiagramm zur Erläuterung einer normalen den schlüssellosen Zugang betreffenden Funktion des Sicherungssystems.

Diese normale den schlüssellosen Zugang betreffende Funktion kann durch den Transceiver, beispielsweise einen 24GHz-Transceiver, der SDR-Einheit 24 erfüllt werden. Die gesamte Kommunikation kann im Halbduplexbetrieb erfolgen, was bedeutet, daß mit der gleichen Frequenz, jedoch zu unterschiedlichen Zeiten gesendet und empfangen werden kann.

In diesem Fall arbeitet das Kraftfahrzeug bzw. die diesem zugeordnete SDR-Einheit 24 als Master und die den herkömmlichen Schlüssel ersetzende CID 26 als Slave. Die dem Fahrzeug zugeordnete SDR-Einheit 24 sendet zu einer Zeit t₀ einen Befehl an die CID beispielsweise in Form eines 24 GHZ-FM-Signals, d.h. eines frequenzmodulierten (FM = frequency modulated) Signals. Die CID 26 empfängt das FM-Signal, demoduliert dieses Signal und sendet ihre Antwort beispielsweise als 24 GHz-FM-Signal, z.B. ihre eigene Identifikation, in einem ersten Schritt einer Anforderungs/Antwort-Sequenz zurück. Anschließend sendet die dem Kraftfahrzeug zugeordnete SDR-Einheit 24 den nächsten Befehl, beispielsweise einen Berechtigungsbefehl, usw.

Der gesamte Berechtigungsvorgang erfolgt beispielsweise in einem Frequenzbereich bei 24 GHz anstatt in einem Frequenzbereich bei 125 kHz und 433 MHz. Die SDR-Einheit 24 erfüllt in vollem Umfang die erforderliche, die Kommunikation betreffende Funktion.

Beispielsweise für eine Notfunktion (passiver Modus) oder zum Aktivieren der CID 26 kann z.B. ein 125 kHz-Modus verwendet werden, um den Energiebedarf für den Bereitschaftszustand zu reduzieren. Dieser Modus wird dann ausschließlich für die soeben genannten speziellen Funktionen (Notfunktion bzw. Aktivieren) eingesetzt. Dann strahlt lediglich der Master, d.h. das Fahrzeug bzw. die diesem zugeordnete SDR-Einheit 24, ein nicht moduliertes 125 kHz-Trägersignal aus, worauf ein 125 kHz-Empfänger in der CID 26 dieses Signal empfängt und den 24 GHz-Transceiver aktiviert. Hierbei werden keine Daten übertragen, so daß weder eine Modulation noch eine Demodulation bei 125 kHz erforderlich ist. Demnach wirkt das 125 kHz-Signal lediglich als Schalter, der in erster Linie dazu verwendet wird, Energie einzusparen bzw. bei einer Notfunktion das CID mit Energie zu versorgen.

Figur 3 zeigt eine schematische Darstellung einer Kurzdistanz-Radareinheit (SDR) 26 des Sicherungssystems 22, die gleichzeitig dazu verwendet wird, festzustellen, ob sich die CID 26 innerhalb oder außerhalb des überwachten Innenraums befindet.

In einem Fahrzeug muß festgestellt werden, ob sich die CID 26 außerhalb oder innerhalb des Fahrzeuginnenraums befindet. Das Vorhandensein der CID 26 wird durch den Transceiver, beispielsweise einen 24 GHz-Transceiver, der SDR-Einheit 24 dadurch festgestellt, daß die Amplituden der von allen, beispielsweise vier, Empfängern der SDR-Einheit 24 empfangenen CID-Signale miteinander verglichen werden. Der 24 GHz-Transceiver kann insbesondere in der Mitte des Fahrzeugs auf dem Dach positioniert sein.

Sind die Amplituden der vier Signale zumindest annähernd gleich groß, so befindet sich die CID 26₁ direkt unterhalb der SDR-Einheit 24. Ist die Differenz kleiner als ein definierter Grenzwert, so kann weiterhin davon ausgegangen werden, daß sich die CID 26₂ noch innerhalb des Fahrzeugs befindet. Liefert jedoch einer der Empfänger im Vergleich zu den anderen ein sehr starkes Signal, so kann man davon ausgehen, daß die CID 26₃ sich außerhalb des Fahrzeugs befindet.

Eine der Schwachstellen der bisherigen Systeme für einen schlüssellosen Zugang war die bestehende Gefahr, daß ein Dieb eine bzw. mehrere Relaisstationen errichtet und das Fahrzeug stiehlt, während der Besitzer weit entfernt ist. Mit der hier beschriebenen SDR-Einheit 24 kann dieses sogenannte Relaisstation-Problem (relay station problem) dadurch beseitigt werden, daß die Laufzeit des Signals zwischen der SDR-Einheit 24 und der CID 26 und zurück gemessen wird. Je weiter die CID 26 entfernt ist, desto größer ist die gemessene Laufzeit. Liegen die Laufzeiten der Signale und damit der Abstand der CID 26 oberhalb einer bestimmten Grenze, so wird die CID 26 nicht akzeptiert.

Die Laufzeitmessung kann beispielsweise über einen Frequenzversatz z.B. ähnlich wie bei der üblichen Arbeitsweise von Radar erfolgen. Der Transceiver, beispielsweise ein FMCW-Transceiver, der Radareinheit 24 sendet ein HF-Signal, beim vorliegenden Ausführungsbeispiel ein 24 GHz-Signal, das in einer bestimmten Bandbreite moduliert wird. Die CID 26 empfängt dieses HF-Signal, ändert dieses in definierter Weise, z.B. durch einen Frequenzversätz entsprechend einer bestimmten festen Frequenz oder durch Modulation, verstärkt dieses Signal und sendet es zurück. Der 24 GHz-Transceiver der SDR-Einheit 24 empfängt dieses Signal, demoduliert es und ermittelt die Laufzeit, um daraus den Abstand der CID 26 zu bestimmen. Normalerweise wird dieser Abstand weniger als 2 oder 3 m betragen. Werden jedoch eine oder mehrere Relaisstationen eingesetzt, so können sich wesentlich längere Zeiten bzw. Entfernungen ergeben.

Bei ausreichender Auflösung kann die Entfernungsmessung auch zur Außenlokalisation der CID 26 herangezogen werden.

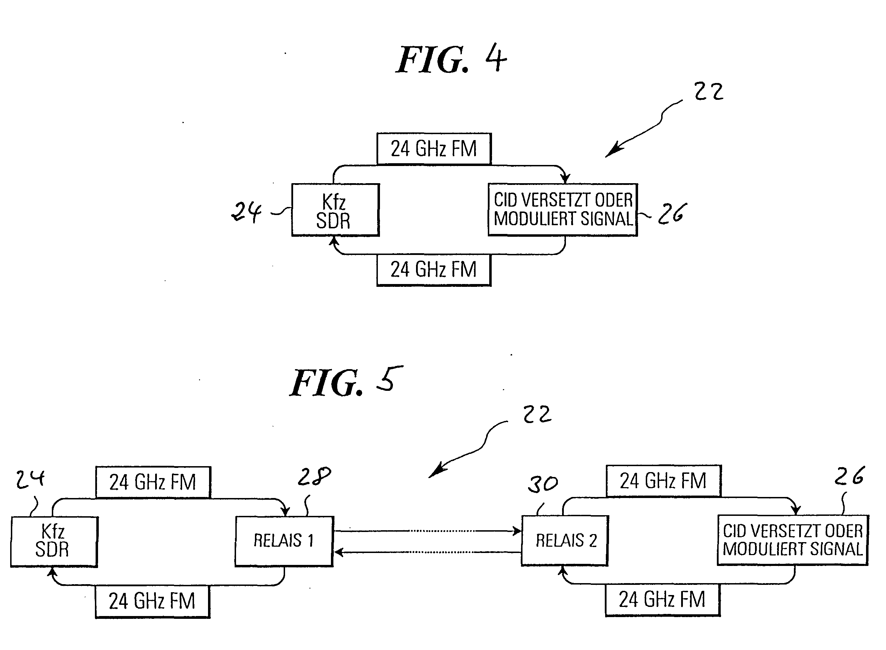

Figur 4 zeigt ein Funktionsdiagramm zur Darstellung des Normalfalls, bei dem sich der die CID 26 bei sich tragende Benutzer in der Nähe des Kraftfahrzeuges befindet und eine direkte Kommunikation zwischen der SDR-Einheit 24 und der CID 26 stattfindet.

In Figur 5 ist der Fall eines versuchten Mißbrauchs mittels zweier Relaisstationen dargestellt. In diesem Fall hält sich der die CID 26 bei sich tragende Benutzer nicht in der Nähe des Fahrzeuges auf. Der jeweilige Dieb führt die Kommunikation zwischen der SDR-Einheit 24 und der CID 26 über zwei Relaisstationen 28, 30 herbei. In diesem Fall findet keine direkte Kommunikation zwischen der SDR-Einheit 24 und der CID 26 statt. Es ergibt sich eine entsprechend höhere Entfernung zwischen der SDR-Einheit 24 und der CID 26, was über die entsprechend größeren Laufzeiten festgestellt werden kann.

Sämtliche der zuvor genannten Funktionen können somit mit einer Radareinheit 24 verwirklicht werden, bei der es sich beispielsweise um eine 24 GHz-FMCW-Radareinheit (SDR) handeln kann.

Grundsätzlich ist auch eine Kombination der anhand der Figur 1 beschriebenen Antidiebstahlsicherung und des anhand der Figuren 2 bis 5 beschriebenen Sicherungssystems möglich.

### Bezugszeichenliste

- 10: Antidiebstahlsicherung
- 12: Kraftfahrzeug
- 14: Radar-Abstandssensor
- 16: Transponder, Chipkarte
- 18: Radarsignale
- 20: Radarsignale
- 22: Sicherungssystem
- 24: multifunktionaler Sensor, SDR-Einheit
- 26: externe Einrichtung, CID
- 28: Relaisstation
- 30: Relaisstation

- d: Abstand

## Patentansprüche

1. Antidiebstahlsicherung (10) insbesondere für Kraftfahrzeuge (12), mit wenigstens einem Radar-Abstandssensor (14) und einem vorzugsweise als Chipkarte ausgeführten, der Benutzeridentifikation dienenden Transponder (16), der vom Abstandssensor (14) ausgehende Radarsignale (18) aufnimmt, verstärkt und vorzugsweise auf einer anderen Frequenz wieder ausstrahlt, wobei der jeweilige Abstand (d) zwischen Abstandssensor (14) und Transponder (16) anhand der vom Transponder (16) zurückgestrahlten und vom Abstandssensor (14) wieder aufgenommenen Radarsignale (20) ermittelbar ist.

2. Antidiebstahlsicherung nach Anspruch 1,
**dadurch gekennzeichnet**,
daß die vom Abstandssensor (14) ausgehenden, in einer vorgebbaren Bandbreite ausgestrahlten Radarsignale (18) im GHz-Bereich liegen.

3. Antidiebstahlsicherung nach Anspruch 2,
**dadurch gekennzeichnet**,
daß die vom Abstandssensor (14) ausgehenden, in einer vorgebbaren Bandbreite ausgestrahlten Radarsignale (18) im Bereich von etwa 24 GHz liegen.

4. Antidiebstahlsicherung nach einem der vorhergehenden Ansprüche,
**dadurch gekennzeichnet**,
daß die Radarsignale (18) im Transponder (16) um eine vorgebbare definierte Frequenz versetzt werden.

5. Antidiebstahlsicherung nach einem der vorhergehenden Ansprüche,
**dadurch gekennzeichnet**,
daß die vom Transponder (16) ausgehenden, vom Abstandssensor (18) aufgenommenen Radarsignale (20) im Abstandssensor (14) um eine vorgebbare definierte Frequenz versetzt werden.

6. Antidiebstahlsicherung nach Anspruch 5,
**dadurch gekennzeichnet**,
daß die Radarsignale (20) im Abstandssensor (14) nach unten versetzt werden.

7. Antidiebstahlsicherung nach einem der vorhergehenden Ansprüche,
**dadurch gekennzeichnet**,
daß sie Teil eines Sicherungssystems, vorzugsweise Chipkartensystems, für einen schlüssellosen Zugang ist.

8. Antidiebstahlsicherung nach einem der vorhergehenden Ansprüche,
**dadurch gekennzeichnet**,
daß sie Teil eines Innenraumschutzsystems ist.

9. Antidiebstahlsicherung nach einem der vorhergehenden Ansprüche,
**dadurch gekennzeichnet**,
daß sie Teil eines Einbruchmeldesystems ist.

10. Antidiebstahlsicherung nach einem der vorhergehenden Ansprüche,
**dadurch gekennzeichnet**,
daß der Radar-Abstandssensor (14) in einem jeweiligen Kraftfahrzeug (12) integriert ist.

11. Antidiebstahlsicherung nach einem der vorhergehenden Ansprüche,
**dadurch gekennzeichnet**,
daß der Abstandssensor (14) und/oder der Transponder (16) für einen Zeitmultiplex-Betrieb ausgelegt sind, um vorzugsweise gleichzeitig mehrere Sicherungsfunktionen zu erfüllen.

12. Antidiebstahlsicherung nach einem der vorhergehenden Ansprüche,
**dadurch gekennzeichnet,**
daß als Abstandssensor (14) ein FMCW- Radar-Abstandssensor vorgesehen ist.

13. Sicherungssystem (22) insbesondere für Kraftfahrzeuge, mit wenigstens einem multifunktionalen Sensor (24), der gleichzeitig sowohl als Radareinheit als auch als Sende-/Empfangseinheit zur Kommunikation mit einer externen Einrichtung (26) vorgesehen ist.

14. Sicherungssystem nach Anspruch 13,
**dadurch gekennzeichnet**,
daß der multifunktionale Sensor (24) einen im Hochfrequenzbereich arbeitenden Kurzdistanz-Radarsensor für einen Innenraumschutz umfaßt.

15. Sicherungssystem nach Anspruch 13 oder 14,
**dadurch gekennzeichnet,**
daß der multifunktionale Sensor (24) mehrere Empfänger und/oder mehrere Sender umfaßt.

16. Sicherungssystem nach einem der vorhergehenden Ansprüche,
**dadurch gekennzeichnet,**
daß der multifunktionale Sensor (24) zur Bereichsüberwachung und/oder zur Objektortung vorgesehen ist.

17. Sicherungssystem nach einem der vorhergehenden Ansprüche,
**dadurch gekennzeichnet,**
daß der multifunktionale Sensor (24) wenigstens einen Sender und/oder wenigstens einen Empfänger für eine drahtlose Kommunikation mit der externen Einrichtung (26) umfaßt.

18. Sicherungssystem nach einem der vorhergehenden Ansprüche,
**dadurch gekennzeichnet,**
daß die externe Einrichtung (26) durch eine der Benutzeridentifikation dienende, insbesondere als aktive Empfangs-/Sendeeinheit oder Transponder ausgeführte Einrichtung (26) gebildet ist.

19. Sicherungssystem nach einem der vorhergehenden Ansprüche,
**dadurch gekennzeichnet,**
daß der multifunktionale Sensor (24) wenigstens zwei Sender und/oder wenigstens zwei Empfänger zur Ortung der externen Einrichtung (26) umfaßt.

20. Sicherungssystem nach Anspruch 19,
**dadurch gekennzeichnet**,
daß mittels des multifunktionalen Sensors (24) feststellbar ist, ob sich die externe Einrichtung (26) innerhalb oder außerhalb des überwachten Innenraumes befindet.

21. Sicherungssystem nach Anspruch 19 oder 20,
**dadurch gekennzeichnet,**
daß zur Ortung der externen Einrichtung (26) die von verschiedenen Empfängern empfangenen und/oder die von verschiedenen Sendern stammenden Signale miteinander verglichen werden.

22. Sicherungssystem nach einem der vorhergehenden Ansprüche,
**dadurch gekennzeichnet**,
daß durch Messung der Laufzeit der zwischen dem multifunktionalen Sensor (24) und der externen Einrichtung (26) ausgetauschten Signale der jeweilige Abstand zwischen dem multifunktionalen Sensor (24) und der externen Einrichtung (26) bestimmbar ist.

23. Sicherungssystem nach einem der vorhergehenden Ansprüche,
**dadurch gekennzeichnet**,
daß die externe Einrichtung (26) vom multifunktionalen Sensor (24) ausgehende, vorzugsweise HF-modulierte Signale aufnimmt, in definierter Weise ändert und anschließend wieder ausstrahlt.

24. Sicherungssystem nach Anspruch 23,
**dadurch gekennzeichnet**,
daß die Laufzeitmessung anhand der vom multifunktionalen Sensor (24) wieder aufgenommenen, durch die externe Einrichtung (26) in definierter Weise geänderten Signale erfolgt.
